# EUROPEAN PATENT APPLICATION

(11) **EP 3 062 223 A1**
(43) Date of publication of application: **31.08.2016**
(21) Application number: 15156729.4
(22) Date of filing: 26.02.2015
(51) Int. Cl.: G06F 9/445, G06F 15/16

(54) **A system and method for installing software with reduced downtime**

(71) Applicant: Agfa Healthcare, 2640 Mortsel (BE)
(72) Inventor: Huybrechts, Tom, 2640 Mortsel (BE); Kenens, Peter, 2640 Mortsel (BE)
(74) Representative: Verbrugghe, Anne Marie L.

(57) **Abstract**

A computer-implemented method (1) for installing software in a system comprising slave nodes (200) executing a slave server installer component (201) and a master node (100) executing a master server installer component (101), comprising:
- upgrading said master server installer component (101) on said master node (100) and said slave server installer component (201) on said slave nodes (200) without interrupting client service;
- installing said master server installer component (101) on said master node (100) without interrupting client service;
- preparing said master server installer component (101) without interrupting client service;
- distributing said slave server installer component (201) to said slave nodes (200) without interrupting client service;
- preparing said slave server installer component (201) without interrupting client service; and
- activating said master server installer component (101) without interrupting client service;
- activating said slave server installer component (201).

## Description

### Field of the Invention

The present invention generally relates to installing software. The invention in particular relates to installing software that typically contains a master server installer component and a slave server installer component in a distributed environment comprising servers, proxy servers and clients. The invention aims at installing such software, in particular in domains like healthcare, with limited downtime for clients.

### Background of the Invention

Software upgrades often introduce a downtime of the distributed environment, during which the servers are unavailable to a user. In most environments, but especially in healthcare environments, users wish to keep the downtime as limited as possible as the life of a patient may depend on the availability of the servers for consulting medical images, etc. In addition to that, modern software development methodologies strive towards short development cycles in which the features of a software and hot fixes are extended in a rather small period of time, e.g. three months. Frequent software upgrades drastically increase the importance of a fluent and non-disruptive software upgrade procedure.

The patent US7461374 by Cisco Technologies Inc., published on December 2^{nd} 2008, entitled "Dynamic installation and activation of software packages in a distributed networking device", describes a method for dynamic installation and activation of software packages. A master node provides a software package database that contains software packages for all the nodes. A user can initiate a software update to occur by indicating to the master node what nodes and which software packages are to be updated. The master node notifies a slave node that a software update is being requested, and the slave node determines the running processes that will be affected by the update. The processes evaluate the effect that the update will have on their operation. If any of the processes determine that the update will degrade or have a negative impact on the operation of the slave node, the process will veto the update. If the master node receives no vetoes, the master node updates the node which installs and activates the software update without interrupting the normal operation of the node. In this case, each node has the intelligence to evaluate the dependencies of the software packages. Depending on the effect the update has on the operation of a node, the node negotiates with the master node as to what software the node will boot with each time the node boots. The master node then notifies the user that the update will for example disrupt the operation of the node. The user has a choice whether to not perform the software update or to enforce the software update upon the node. The decision process also occurs when multiple nodes are to be updated. If one node rejects the update, then none of the nodes are updated until the user makes a decision. The user can update all of the nodes that indicate no disruptive effect and skip the other nodes, enforce the software update on all of the nodes, or skip the software update entirely. In other words, a user can decide not to update all the nodes at the same time, which means that some nodes of the distributed networking system will be down at a different time than other nodes.

The method known from US7461374 dramatically increases the total downtime of the distributed networking system comprising a plurality of nodes. The distributed networking device then also comprises nodes with a previous version of the software and nodes with the updated version of the same software. This method therefore also leads to the co-existence of several versions of the same software installed on different nodes. There is even a risk that some nodes of the device run an obsolete version of the software. The decision making occurs at the side of a client who is external to the distributed networking device. The decision making can result in a lack of coordination of the update of all the nodes of the distributed networking device which eventually increases the downtime experienced by the user.

The patent US6681389 by Lucent Technologies Inc., published on January 20^{th} 2004, entitled "Method for providing scaleable restart and blackout of software upgrades for clustered computing", describes the update of a platform and/or application software on all online servers in a cluster without manually taking each server offline. Initially, the platform and/or the application software are stored in respective directories during a phase referred to as an apply phase. The apply phase then only consists in the physical deployment of the files of the platform and/or the application software. Next, the platform and/or the application software are activated, with or without a trial or test phase, during a phase referred to as an activation phase. The activation phase is then responsible for activating the new software as the running image for both the application and the platform software.

As the apply phase described in US6681389 only consists in the physical deployment of the files of the software on the servers of the cluster, the activation phase results in a very long downtime of the cluster, as all the components of the software need to be activated during this phase, even components that do not necessarily require downtime of the cluster. This long downtime jeopardizes the experience of a user of a client of the cluster. Additionally, during the activation phase, it is determined on which server of the cluster the set of software, platform and/or application, needs to be activated. For example, the platform and/or the application software on all online servers in the cluster can be restarted. Alternatively, the application software on one or more online servers in the cluster can be restarted. The activation phase therefore comprises different levels of activation such as a process restart, a server reboot, or a cluster reboot. This method therefore results in an allowed co-existence of several versions of the same software installed on different online servers of the cluster. Additionally, software update assist scripts or functions are used to perform the directory structure manipulation of products associated with each software update. The assist scripts serve as a layer between the software algorithm that performs the various phases described above and the actual operating system. This drastically increases the complexity of the software upgrade of the cluster as assist scripts need to be generated and configured for each server of the cluster, before any phase of the upgrade has even started.

It is an objective to disclose a system and the related method that overcome the above identified shortcomings of existing solutions. More particularly, it is an objective to disclose such a system and method for installing software with reduced downtime for the user in a coordinated, quick and economic manner. It is a further objective to reduce the risk for co-existence of different software versions on different servers and/or clients of a distributed system.

### Summary of the Invention

According to a first aspect of the present invention, the above defined objectives are realized by a computer-implemented method for installing software having one master server installer component and multiple slave installer server components in a system with clients, a cluster of nodes comprising slave nodes executing the slave server installer component and a master node executing the master server installer component, and proxy servers directing a client out of the clients to a respective one of the nodes of the central cluster of nodes, the method comprising the steps of:
- in a first step, upgrading the master server installer component on the master node and the multiple slave server installer components on the slave nodes without interrupting client service;
- in a second step subsequent to the first step, installing the master server installer component on the master node without interrupting client service;
- in a third step subsequent to the second step, preparing the master server installer component on the master node without interrupting service;
- in a fourth step subsequent to the third step, distributing the slave server installer component to the slave nodes without interrupting client service;
- in a fifth step subsequent to the fourth step, preparing the slave server installer component on the slave nodes without interrupting client service; and
- in a sixth step subsequent to the fifth step, activating the master server installer component on the master node;
- in a seventh step simultaneous to the sixth step, activating the slave server installer component on the slave nodes.

In accordance with the present invention, the software is installed with a reduced downtime experienced by a user of the client. In a clustered setup, one of the nodes acts as a master node and all the other nodes are considered as slave nodes. The main difference between a master node and the slave nodes is that the master node is capable of orchestrating a distributed installation of the software across all the slave nodes. The master server installer component (also called master server installer agent, the framework being the installer agent is upgraded) and the multiple slave server installer components (likewise also called slave installer agent) are first upgraded respectively on the master node and the slave nodes. This way, the installation framework is upgraded. The installation process of the software on the master node is controlled by the master server installer component that is only installed on the master node. Preparing the master server installer component on the master node targets the deployment of all binaries on the master node and installation actions which do not interrupt the service at the side of the client, also referred to as the client service, and which do not interrupt the service of the cluster of nodes, such as deleting previous version of the software that were installed on the master node, unpacking the software, deploying the new software components, creating SSL certificates to allow communication between the master node and the slave nodes, etc. This way, all the installation actions related to the software which do not require interruption of the client service are performed and are coordinated so that the downtime needed for activation of the software is reduced to a minimum. Subsequently, the master node deploys the slave server installer component on all the slave nodes without interrupting service of the cluster of nodes and without interrupting client service at the side of the client. Preparing the slave server installer components on the slave nodes targets the deployment of all binaries on the slave nodes and installation actions which do not interrupt the service of the cluster of nodes and which do not interrupt the client service. This way, all the installation actions related to the software which do not require interruption of the service at the side of the client are performed and are coordinated so that the downtime needed for activation of the software for the client is reduced to a minimum. Activating the master server installer component on the master node targets for example deactivation of the running software version, finalization of the upgrade and activation of the new software version in a secure way, including for example stopping the active services, upgrading the database, updating the setup of the firewall, etc. Preparation and activation of the master server installer component on the master node can be triggered separately or sequentially. Activating the slave server installer component on at least one slave node targets for example deactivation of the running software version, finalization of the upgrade and activation of the new software version in a secure way, including for example stopping the active services, upgrading the database, updating the setup of the firewall, etc. The activation of the slave server installer component is triggered by the activation of the master server installer component. This reduction of the downtime of the cluster of nodes at the side of the client in domains like healthcare drastically improves the quality of the treatment of a patient. Indeed, a physician can perform his diagnosis much faster as the time needed to diagnose at the side of the client does not depend on the availability of the cluster of nodes. Additionally, the method according to the present invention is made robust by the fact that an automatic rollback can be triggered by the master node in case of failure of the preparation phase and/or the activation phase on one or more of the slave nodes. This guarantees that the master node and all the slave nodes install and execute the same version of the software hence reducing the risk for co-existence of different versions of the software. Additionally, the computer-implemented method according to the present invention is adaptive and flexible as the preparation phase and/or the activation phase on the master node and/or on the slave nodes can be triggered manually or can be scheduled. This way, the disturbance caused by the downtime at the side of the client of the cluster of nodes needed to install the software is minimized or even eliminated as the client can schedule when the downtime has the least impact on its performance.

According to an optional embodiment, the third step and/or the fifth step and/or the sixth step and/or the seventh step further comprise monitoring by the clients a progress of respectively preparing the master server installer component and/or preparing the slave server installer component and/or activating the master server installer component and/or activating the slave server installer component.

A user of the client is aware of the progress of the preparation and/or of the activation of the master server installer component and/or of the slave server installer component on respectively the master node and/or on one or more slave nodes. The master node monitors the progress of the preparation and/or the activation of the master server installer component and of the slave server installer component of each slave node, and the master node reports this progress to the user of the client for the master node and for each slave node. Alternatively, the master node and each of the slave nodes report the progress of the preparation and/or the activation of respectively the master server installer component and/or the slave server installer component to the client. For example, logs containing information indicative for the progress on the master node and on the slave nodes can be generated and communicated to the client. This way, when the progress is not acceptable by a user of the client, the user can cancel the preparation and/or the activation of the master server installer component and/or of the slave server installer component, and schedule it/them at a moment the user judges as more acceptable. For example, when the activation of the slave server installer component on the slave nodes results in a downtime, the user monitors the progress of the activation, judges the downtime is not acceptable for him and can choose to skip or re-schedule the activation at a moment the user judges as more acceptable. Alternatively, when an installation error occurs, a user can take corrective actions. According to a further alternative embodiment, when a manual command is invoked at the side of the client, a user of the client is able to configure installation parameters and start the preparation, the activation or both phases of the master server installer component and/or of the slave server installer component based on this configuration. This allows a user to take control over the software installation process and to perform a separate activation to allow for example the preparation of the master and/or the slave server installer component a few hours or a day before their activation. This monitoring and the resulting adaptability offered to the user guarantee the flexibility of the computer-implemented method.

According to an optional embodiment, the third step further comprises:
- receiving a master request for scheduling the sixth step from the clients;
and the sixth step further comprises:
- scheduling activating the master server installer component according to the master request.

This way, a user of the client can generate a master request and therefore can manually schedule the activation of the master server installer component on the master node without interrupting service and according to the master request. Alternatively, a user of the client can generate a master request to manually trigger the activation of the master server installer component on the master node without interrupting service and according to the master request.

According to an optional embodiment, the fifth step is synchronized on all of the slave nodes.

This way, the seventh step of the computer-implemented method will only start when all the slave nodes are ready to execute the seventh step of the computer-implemented method, i.e. the fifth step of the computer-implemented method has been completed on all the slave nodes, and when the activation of the master server installer component has started. In other words, the activation of the slave server installer component on the slave nodes only starts when the slave server installer component of all the slave nodes has been prepared and when the activation of the master server installer component has started. This ensures the downtime at the side of the client generated by the fifth and the seventh steps is reduced to a minimum as only actions requiring the downtime for the client will be executed in the fifth and the seventh step simultaneously. This synchronization logic on all the slave nodes and on the master node further guarantees that all the slave nodes and the master nodes are in sync. This indeed prevents one or more slave nodes and the master node from running a different, e.g. older, version of the software than the one intended by the preparation of the slave server installer component on the slave nodes. In other words, this prevents the co-existence of different versions of the software within the distributed system. Only the master node and the slave nodes using the last activated version of the software can start.

According to an optional embodiment, the third step further comprises the steps of:
- deleting from the master node versions of the master server installer component older than a latest activated version of the master server installer component;
- downloading the master server installer component;
- extracting and copying the master server installer component on the master node;
- generating a SSL certificate allowing a two-way encrypted communication between the master node and the slave nodes in a secure way; and
- staging different desktops to the clients and the proxy servers.

The steps of the computer-implemented method comprise one or more steps which are executed depending on the type of node to be installed, for example steps that are specific to the master node, or to the slave nodes and/or to the proxy server. This makes the computer-implemented method flexible and responsive to request from the market. For example, additional steps can be added to one or more steps of the computer-implemented method to answer a need of a specific slave node, or unnecessary steps can be removed for a given slave node. In a distributed system, a next step will only start on a node when all the other nodes are also ready to execute the same next step. This guarantees all the nodes are in sync. If a step fails on the master node, all stages on the other nodes will also abort without interrupting the service at the side of the client. Additionally, the third step of the computer-implemented method comprises the step of generating a SSL certificate allowing communication between the master node and the slave nodes. Generating the necessary certificates at install time and immediately applying them at run-time supports a secure two-way communication between the components of the distributed system.

In a distributed system, a next step will only start on a slave node when all the other slave nodes are also ready to execute the same next step. This guarantees all the slave nodes are in sync. If a step fails on one or more of the slave nodes, all stages on the other slave nodes will also abort without interrupting the service. Additionally, the seventh step of the computer-implemented method comprises the step of making the SSL certificate generated by the master node available to the proxy servers. This supports a secure two-way communication between the components of the distributed system.

According to an optional embodiment, the sixth step further comprises activating the last activated version of the master server installer component on the master node in case of failure of the sixth step.

All configured nodes must be online for the install action to be successful. If a step fails on the master node, all stages on the other nodes will also abort. If this failure happens during the activation of the master server installer component on the master node, the last successfully activated version of the master server installer component is automatically re-instated on the master node. Alternatively, if the failure happens during the activation of the master server installer component on the master node, the last successfully activated version of the master server installer component can be manually re-instated by a user on the master node. In both cases, this ensures the service to the client is interrupted for a minimum amount of time and prevents different versions of the software from co-existing within the distributed system.

According to an optional embodiment, the seventh step further comprises activating the last activated version of the slave server installer component on the slave nodes in case of failure of the seventh step on one of the slave nodes.

If a step fails on one or more of the slave nodes, all stages on the other slave nodes will also abort. If this failure happens during the activation of the slave server installer component on one or more slave nodes, the last successfully activated version of the slave server installer component is automatically re-instated on all the slave nodes. Alternatively, if the failure happens during the activation of the slave server installer component on one or more slave nodes, the last successfully activated version of the slave server installer component can be manually re-instated on all the slave nodes. In both cases, this ensures the service to the client is interrupted for a minimum amount of time and prevents different versions of the software from co-existing within the distributed system.

According to a second aspect of the invention, there is provided a data processing system comprising means for carrying out the method according to the present invention.

In accordance with the present invention, the software is installed with a reduced downtime experienced by a user of the client. In a clustered setup, one of the nodes acts as a master node and all the other nodes are considered as slave nodes. The main difference between a master node and the slave nodes is that the master node is capable of orchestrating a distributed installation of the software across all the slave nodes. The installation process of the software on the master node is controlled by the master server installer component that is only installed on the master node. Preparing the master server installer component on the master node targets the deployment of all binaries on the master node and installation actions which do not interrupt the service of the cluster of nodes, such as deleting previous version of the software that were installed on the master node, deploying the new software components, creating SSL certificates to allow communication between the master node and the slave nodes, etc. This way, all the installation actions related to the software which do not require interruption of the service are performed and are coordinated so that the downtime needed for activation of the software is reduced to a minimum. Activating the master server installer component on the master node targets for example deactivation of the running software version, finalization of the upgrade and activation of the new software version in a secure way, including for example stopping the active services, upgrading the database, updating the setup of the firewall, etc. Subsequently, the master node deploys the slave server installer component on all the slave nodes without interrupting service of the cluster of nodes. Preparing the slave server installer components on the slave nodes targets the deployment of all binaries on the slave nodes and installation actions which do not interrupt the service of the cluster of nodes. This way, all the installation actions related to the software which do not require interruption of the service are performed and are coordinated so that the downtime needed for activation of the software is reduced to a minimum. This reduction of the downtime of the cluster of nodes at the side of the client in domains like healthcare drastically improves the quality of the treatment of a patient. Indeed, a physician can perform his diagnosis much faster as the time needed to diagnose does not depend on the availability of the cluster of nodes. Additionally, the method according to the present invention is made robust by the fact that an automatic rollback can be triggered by the master node in case of failure of the preparation phase and/or the activation phase on one or more of the slave nodes. This guarantees that the master node and all the slave nodes install and execute the same version of the software hence reducing the risk for co-existence of different versions of the software. Additionally, the computer-implemented method according to the present invention is adaptive and flexible as the preparation phase and/or the activation phase on the master node and/or on the slave nodes can be triggered manually or can be scheduled. This way, the disturbance caused by the downtime of the cluster of nodes needed to install the software is minimized or even eliminated as the client can schedule when the downtime has the least impact on its performance.

The current invention in addition also relates to a computer program comprising software code adapted to perform the method according to the present invention.

The invention further relates to a computer readable storage medium comprising the computer program according to the present invention.

### Brief Description of the Drawings

Fig. 1 schematically illustrates an embodiment of a computer-implemented method according to the present invention.
Fig. 2 schematically illustrates an embodiment of the third and the sixth steps of the computer-implemented method according to the present invention.
Fig. 3 schematically illustrates an embodiment of the fifth and the seventh steps of the computer-implemented method according to the present invention.
Fig. 4 schematically illustrates an embodiment of a system comprising means for carrying out the method according to the present invention.
Fig. 5 schematically illustrates a suitable computing system for hosting the battery operated device or the cloud application of Figure 4.

### Detailed Description of Embodiment(s)

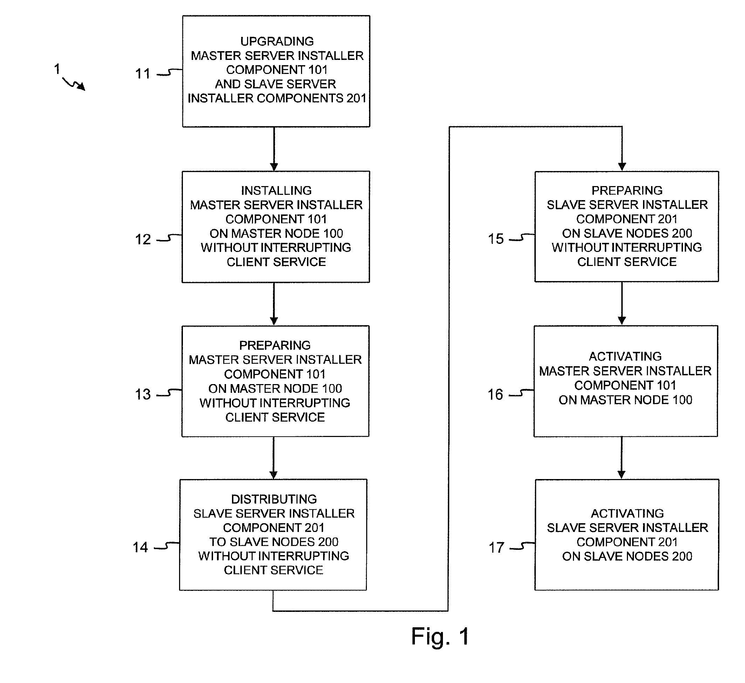

According to an embodiment shown in Fig. 1, the method 1 according to the present invention comprises seven steps. The first step 11 comprises upgrading the master server installer component 101 and the multiple slave server installer components 201 respectively on the master node 100 and the slave nodes 200 without interrupting service. The second step 12 comprises installing the master server installer component 101 on the master node 100 without interrupting the client service. The third step 13, subsequent to the second step 12, comprises preparing the master server installer component 101 on the master node 100 without interrupting the client service. The fourth step 14, subsequent to the third step 13, comprises distributing the slave server installer component 201 to the slave nodes 200 without interrupting the client service. The fifth step 15, subsequent to the fourth step 14, comprises preparing the slave server installer component 201 on the slave nodes 200 without interrupting the client service. The sixth step 16, subsequent to the fifth step 15, comprises activating the master server installer component 101 on the master node 100. The seventh step 17, simultaneous to the sixth step 16, comprises activating the slave server installer component 201 on the slave nodes 200.

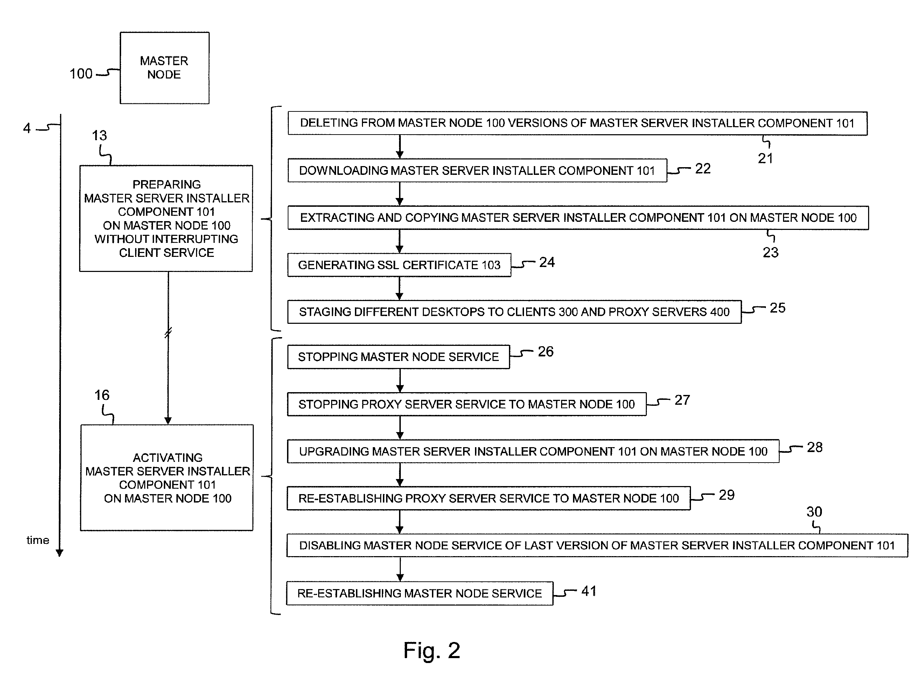

According to an embodiment shown in Fig. 2, the third step 13 of the computer-implemented method according to the present invention concerns the master node 100 and comprises several steps. A timeline 4 on Fig. 2 indicates that the activation of the master server installer component 101 on the master node 100 requires the preparation of the master server installer component 101 on the master node 100 to be completed. Preparing the master server installer component 101 on the master node 100 according to an embodiment of the present invention for example comprises the steps of:
- deleting from the master node 100 versions of the master server installer component 101 older than the latest version of the master server installer component 101 activated on the master node 100. For example, only the current version and the previous version of the master server installer component 101 are retained to allow a rollback to the previous version in case of failure of the preparation of the master server installer component 101 on the master node 100.
- downloading the master server installer component 101. For example, the master server installer component 101 may be retrieved from an http or ftp location in case the master server installer component 101 is not available locally.
- extracting and copying the master server installer component 101 on the master node 100. This step comprises extracting for example a Java Development Kit, also referred to as a JDK, and copying the JDK to the correct installation location. Configuration parameters can be fed to the master node 100 by a client via Setup Information Files installer, also referred to as a SIF installer, and/or by a master node 100 of another cluster of nodes 3. The identification of the PACS system to which data will be saved and according to the DICOM protocol is for example configured. These configuration parameters may be applied to the files that have been extracted to allow the master node 100 to run in a cluster of nodes 3. The configuration parameters may further comprise for example a bind address, messaging configuration, etc. Then the master node 100 may for example configure a load balancer to which the client sends requests for medical images and that distributes the requests to the different nodes of the cluster of nodes 3. The master node 100 is then made aware that it belongs to a cluster of nodes 3.
- generating a SSL certificate 103 allowing a two-way communication between the master node 100 and the slave nodes 200. The use of a SSL certificate 103 ensures the confidentiality of the communication between the master node 100 and a slave node 200. The slave node 200 must identify itself before it can communicate with the master node 100. As the SSL certificate 103 covers a two-way communication, the master node 100 must also identify itself before it can communicate with a slave node 200.
- staging different desktops to the clients 300 and the proxy servers 400. In order to increase the performance, as soon as the new software is installed on the nodes of the cluster of nodes 3, the software is for example pushed as close as possible to the clients. The clients then often request if an upgrade of the software is available, and pull the upgrade from the proxy servers.

In Fig. 2, the sixth step 16 of the computer-implemented method according to the present invention concerns the master node 100 and comprises several steps. A timeline 4 on Fig. 2 indicates that the activation of the master server installer component 101 on the master node 100 requires the preparation of the master server installer component 101 on the master node 100 to be completed. Activating the master server installer component 101 on the master node 100 according to an embodiment of the present invention for example comprises the steps of:
- stopping master node service. The activation for example only proceeds when the database on which the medical images are stored is up and running. The master node service downtime can be scheduled to occur at a moment when it is the least problematic for the client, or it can be manually or remotely triggered. The downtime of the master node service can for example be reduced to only a few minutes.
- stopping proxy server service to the master node 100. As a consequence of the downtime of the master node, the load balancer service to the master node 100 and/or the proxy server service to the master node 100 are also stopped.
- upgrading the master server installer component 101 on the master node 100. The latest version of the master server installer component 101 is deployed on the master node 100. For example, some keys are patched in the registry and/or a firewall configuration is applied.
- re-establishing the proxy server service to the master node 100. For example, a windows service for the load balancer is created and the load balancer service is started. For example, a windows service for the proxy servers 400 is created and the proxy server service is started.
- disabling master node service of a latest activated version of the master server installer component 101. For example, the new version of the master server installer component 101 is set to "autostart" in order to deploy automatically.
- re-establishing the master node service.

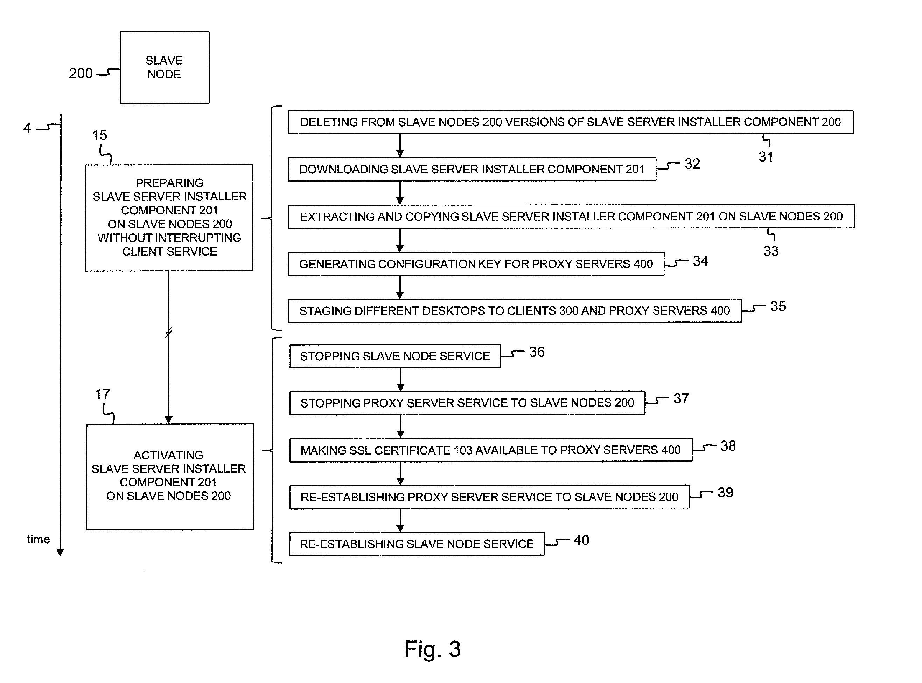

According to an embodiment shown in Fig. 3, the fifth step 15 of the computer-implemented method according to the present invention concerns the slave nodes 200 and comprises several steps. A timeline 4 on Fig. 3 indicates that the activation of the slave server installer component 201 on a slave node 200 requires the preparation of the slave server installer component 201 on the slave node 200 to be completed. Preparing the slave server installer component 201 on the slave node 200 according to an embodiment of the present invention for example comprises the steps of:
- deleting from the slave nodes versions of the slave server installer component 201 older than a latest activated version of the slave server installer component 201. For example, only the current version and the previous version of the slave server installer component 201 are retained to allow a rollback to the previous version in case of failure of the preparation of the slave server installer component 201 on the slave node 200.
- downloading the slave server installer component 201. The slave server installer component 201 for the proxy server 400 may be downloaded from the master node 100 to the proxy server 400. This step comprises for example downloading from the master node 100 to the proxy server 400 an installation package for the JDK package.
- extracting and copying the slave server installer component 201 on the slave nodes 200. This step for example further comprises extracting and copying the JDK to the correct installation location. Configuration parameters can be fed to the slave node 200 by a client via Setup Information Files installer, also referred to as a SIF installer, and/or by a master node 100 of another cluster of nodes 3. The identification of the PACS system to which data will be saved and according to the DICOM protocol is for example configured. These configuration parameters may be applied to the files that have been extracted to allow the slave node 200 to run in a cluster of nodes 3. The configuration parameters may further comprise for example a bind address, messaging configuration, etc. The slave node 200 is then made aware that it belongs to a cluster of nodes 3.
- generating a configuration for the proxy servers 400. For example, a load balancer configuration may be created for one or more proxy servers 400.
- staging different desktops to the clients connected to the proxy servers 400. In order to increase the performance, as soon as the new software is installed on the nodes of the cluster of nodes 3, the software is for example pushed as close as possible to the clients. The clients then often request if an upgrade of the software is available, and pull the upgrade from the proxy servers.

In Fig. 3, the seventh step 17 of the computer-implemented method according to the present invention concerns the slave nodes 200 and comprises several steps. A timeline 4 on Fig. 3 indicates that the activation of the slave server installer component 201 on the slave nodes 200 requires the preparation of the slave server installer component 201 on the slave nodes 200 to be completed. Activating the slave server installer component 201 on the slave node 200 according to an embodiment of the present invention for example comprises the steps of:
- stopping slave nodes service. The slave nodes service downtime can be scheduled to occur at a moment when it is the least problematic for the client, or it can be manually or remotely triggered. The downtime of the slave nodes service can for example be reduced to only a few minutes.
- stopping proxy server service to the slave nodes 200. As a consequence of the downtime of the slave nodes 200, the load balancer service to the slave nodes 200 and/or the proxy server service to the slave nodes 200 are also stopped.
- making said SSL certificate 103 available to the proxy servers. This makes the SSL certificate 103 and the key available to the proxy servers 400 and allows two-ways SSL connections with the slave nodes 200.
- re-establishing the proxy server service to the slave nodes 200.
- re-establishing the slave nodes service. For example, the new version of the slave server installer component 201 is set to "autostart" in order to deploy automatically.

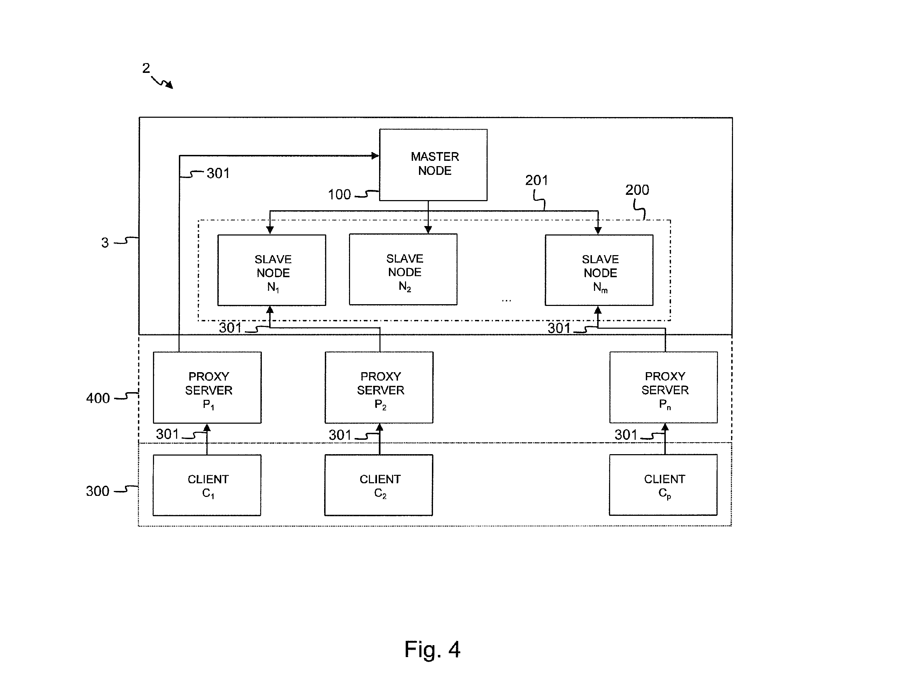

According to an embodiment shown in Fig. 4, a data processing system 2 according to the present invention comprises means for carrying out the method according to the present invention. The data processing system 2 depicted on Fig. 4 comprises a cluster of nodes 3, a plurality of proxy servers 400, and a plurality of clients 300. The cluster of nodes 3 comprises a master node 100, and a plurality of slave nodes 200, labelled N₁, N₂, etc to Nₘ, where m is an integer larger than 1. The proxy servers 400 are labelled P₁, P₂, etc to Pₙ, where n is an integer larger than 1. The clients 300 are labelled C₁, C₂, etc to Cp, where p is an integer larger than 1. As visible on Fig. 4, the client 300 labelled C₁ generates a request 301 for medical images and sends it to the proxy server 400 labelled P₁, while the client 300 labelled C₂ generates a request 301 for medical images and sends it to the proxy server 400 labelled P₂ and the client 300 labelled Cp generates a request 301 for medical images and sends it to the proxy server 400 labelled Pₙ. As visible on Fig. 4, the proxy server 400 labelled P₁ forwards the request 301 to the master node 100, while the proxy server 400 labelled P₂ forwards the request 301 to the slave node 200 labelled N₁ and the proxy server 400 labelled Pₙ forwards the request 301 to the slave node 200 labelled Nₘ. The master node 100 distributes the slave server installer component 201 to the slave nodes 200 without interrupting service.

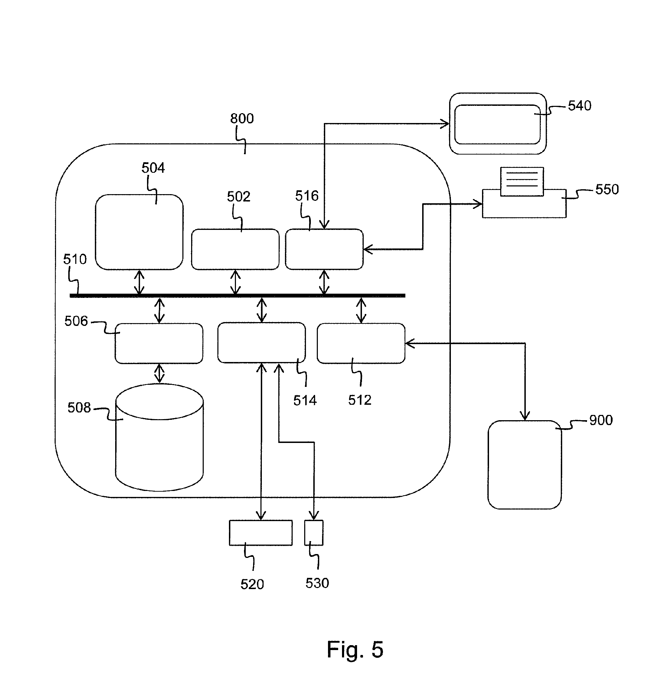

Fig. 5 shows a suitable computing system 800 for hosting the system 2 of Fig. 4. Computing system 800 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing device 800, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1Gb Ethernet interfaces that enables computing system 800 to communicate with other devices and/or systems, for example mechanisms for communicating with one or more other computing systems 900. The communication interface 512 of computing system 800 may be connected to such another computing system by means of a local area network (LAN) or a wide area network (WAN, such as for example the internet, in which case the other computing system 580 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used.

The system 2 of Fig. 4 can be implemented as programming instructions stored it local memory 504 of the computing system 800 for execution by its processor 502. Alternatively the system 2 of Fig. 4 could be stored on the storage element 508 or be accessible from another computing system 900 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method (1) for installing software having a master server installer component (101) and at least one slave server installer component (201) in a system (2) with clients (300), a cluster of nodes (3) comprising slave nodes (200) executing said slave server installer component (201) and a master node (100) executing said master server installer component (101), and proxy servers (400) directing a client (300) out of said clients (300) to a respective one of said nodes of said cluster of nodes (3), said method (1) comprising the steps of:
- in a first step (11), upgrading said master server installer component (101) on said master node (100) and said multiple slave server installer components (201) on said slave nodes (200) without interrupting client service;
- in a second step (12) subsequent to said first step (11), installing said master server installer component (101) on said master node (100) without interrupting service;
- in a third step (13) subsequent to said second step (12), preparing said master server installer component (101) on said master node (100) without interrupting client service;
- in a fourth step (14) subsequent to said third step (13), distributing said slave server installer component (201) to said slave nodes (200) without interrupting client service;
- in a fifth step (15) subsequent to said fourth step (14), preparing said slave server installer component (201) on said slave nodes (200) without interrupting client service; and
- in a sixth step (16) subsequent to said fifth step (15), activating said master server installer component (101) on said master node (100);
- in a seventh step (17) simultaneous to said sixth step (16), activating said slave server installer component (201) on said slave nodes (200).

2. A method (1) according to claim 1, wherein said third step (13) and/or said fifth step (15) and/or said sixth step (16) and/or said seventh step (17) further comprise monitoring by said clients (300) a progress of respectively said preparing said master server installer component (101) and/or said preparing said slave server installer component (201) and/or said activating said master server installer component (101) and/or said activating said slave server installer component (201).

3. A method (1) according to any of the preceding claims, wherein said third step (12) further comprises:
- receiving a master request (102) for scheduling said sixth step (16) from said clients (300);
and wherein said sixth step (16) further comprises:
- scheduling said activating said master server installer component (101) according to said master request (102).

4. A method (1) according to any of the preceding claims, wherein said fifth step (15) is synchronized on all of said slave nodes (201).

5. A method (1) according to any of the preceding claims, wherein said third step (13) further comprises the steps of:
- deleting from said master node (100) versions of said master server installer component (101) older than a latest activated version of said master server installer component (101);
- downloading said master server installer component (101);
- extracting and copying said master server installer component (101) on said master node (100);
- generating a SSL certificate (103) allowing a two-way communication between said master node (100) and said slave nodes (200); and
- staging different desktops to said clients (300) and said proxy servers (400).

6. A method (1) according to any of the preceding claims, wherein said sixth step (16) further comprises activating said last activated version of said master server installer component (101) on said master node (100) in case of failure of said sixth step (16).

7. A method (1) according to any of the preceding claims, wherein said seventh step (17) further comprises activating said last activated version of said slave server installer component (201) on said slave nodes (200) in case of failure of said seventh step (17) on one of said slave nodes (201).

8. A data processing system comprising means for carrying out the method (1) of any of claims 1 to 7.

9. A computer program comprising software code adapted to perform the method of any of the claims 1 to 7.

10. A computer readable storage medium comprising the computer program of claim 9.
